Europäisches Patentamt

European Patent Office

Office européen des brevets

(11) Publication number: 0 346 793
A1

## (12) EUROPEAN PATENT APPLICATION

(21) Application number: 89110575.1

(22) Date of filing: 12.06.89

(51) Int. Cl.⁴: H02P 3/06 , D06F 37/30

(30) Priority: 13.06.88 IT 4573588

(43) Date of publication of application:
20.12.89 Bulletin 89/51

(84) Designated Contracting States:
DE ES FR GB IT SE

(71) Applicant: INDUSTRIE ZANUSSI S.p.A.
Via Mazzini 13
I-33170 Pordenone(IT)

(72) Inventor: Grandin, Graziello
Via Vecchia di Corva 17
I-33170 Pordenone(IT)
Inventor: Toffolon, Giuseppe
Via Brozzette 1
I-33087 Pasiano (Pordenone)(IT)

(74) Representative: Grosse, Wolfgang et al
Patentanwälte Herrmann-Trentepohl,
Kirschner Grosse, Bockhorni & Partner
Forstenrieder Allee 59
D-8000 München 71(DE)

(54) A means for quickly stopping the rotation of the motor of a washing machine or a combined washer and dryer for laundry.

(57) A means for quickly stopping the rotation of the motor (1), and thus of the drum, of a washing machine or a combined washer and dryer for laundry, after the spinning phases provided during washing.

The means comprises a relay (5) equipped with an electromagnet (6) connected, in series with the programmer-retarder (4) of the machine, between the electric main (7) and the neutral conductor (9), said electromagnet being adapted to move into two different positions a moving contact (10) connected to the stator and rotor windings (2, 3) of the motor (1), thereby supplying or interrupting the supply of power to the motor.

In the latter case, the motor (1) is thus driven by the inertial movement of the drum that generates an electric current so as to produce a braking action that quickly stops the motor (1) and the drum. Advantages: the total duration of the washing programs is considerably reduced, resulting in lower power consumption by the machine.

# A means for quickly stopping the rotation of the motor of a washing machine or a combined washer and dryer for laundry

The present invention relates to a means for quickly stopping the rotation of the motor of a washing machine or a combined washer and dryer for laundry, in order to reduce the total duration of the various washing programs of the machine.

As is known, conventional washing machines or combined washers and dryers for laundry are designed to run through washing programs in which the drum of the machine is set rotating by the motor at a low speed during the effective washing phases, with alternating directions of rotation, and at a high speed, in one predetermined direction of rotation, during the spinning phases provided for the final rinsing and wringing of the laundry.

The drum is also set rotating at a high speed for short time intervals during the washing phases in the case of washing machines whose washing programs are performed with repeated recycling of the washing liquid from the lower to the upper part of the vessel of the machine, where the liquid is sprayed onto the laundry.

However, although such machines function in a satisfactory way, they have the disadvantage of lacking a means for quickly stopping the rotation of the drum at the end of each washing and spinning phase of the machine in which the drum is driven at high speed.

Thus, given that the drum stops only after periods of time that are relatively long and proportional to the quantity of laundry contained therein and that each program of the machine provides diverse phases of washing and spinning, it follows that the total duration of these programs is considerably greater than that obtainable if the drum is stopped at the end of each such phase.

It would therefore be favorable, and is the object of the present invention, to realize a means of a simple and reliable type for quickly stopping the rotation of the drum of such a machine after the end of each washing and/or spinning phase.

This and other objects are achieved according to the invention by a means for rapidly stopping the rotation of the motor of a washing machine or a combined washer and dryer for laundry, comprising at least one programmer-retarder known per se, preferably of the electronic type, adapted to select and control the run of the washing programs of the machine, said motor preferably being a universal electric motor equipped with at least one stator winding and one rotor winding.

This means is characterized in that it comprises control means for selectively connecting said stator and rotor windings with both electric conductors, the mains and the neutral conductor, of the machine via said programmer-retarder, or only with the neutral conductor, optionally via at least one load element.

The invention will be understood better from the following description, intended merely as a nonrestrictive example, with reference to the single adjoined figure which shows the electric circuit diagram of the present stopping means for washing machines or combined washers and dryers for laundry.

Referring to this figure, one can see some electrical components installed on washing machines or combined washers and dryers for laundry, comprising an electric motor 1 preferably of the universal type for rotating the drum (not shown) of the machine in both directions of rotation at low speed during the washing phases and in one direction of rotation at high speed during the spinning phases provided for final rinsing and wringing of the laundry.

Such a motor may also be used in a washing machine provided with a conduit for recycling the washing liquid, that is connected with the lower and to the upper part of the vessel of this machine, where the liquid is sprayed onto the laundry.

In this case, the washing phases of the machine are thus performed with rotation of motor 1 at high speed and for brief time intervals.

More specifically, motor 1 is provided with at least one separate stator winding 2 and one separate rotor winding 3 interconnected in the way described below and dimensioned to effect the rotation of the rotor (not shown) of the motor at low and high speed during the phases of the aforesaid program.

The machine in question finally comprises a programmer-retarder 4 known as such, preferably of the electronic type as in the present case, for selecting and controlling the run of the washing programs of the ma chine. The remaining electric components (not shown) for ensuring the functioning of the machine are also provided.

To allow for a quick stop of the rotation of motor 1, and thus of the drum of the machine, after the end of each washing and/or spinning phase of the machine, thereby reducing the total duration of the washing programs, the invention provides for the use of a means comprising substantially at least one relay 5 or similar means provided with a corresponding electromagnet 6 connected with electric main 7, in series to programmer-retarder 4 and at least to one switch 8, as well as with neutral conductor 9 of the electric circuit of the machine, said electromagnetic being adapted to move an electric moving contact 10 into two different operative positions, with the modalities described below.

More specifically, moving contact 10 is connected in series with both stator winding 2 and rotor winding 3, the latter being connected in turn with neutral conductor 9, and is furthermore movable from an operative position in which it is normally closed on fixed contact 11 when electromagnet 6 is deenergized, to an operative position in which it is closed on fixed contact 12 and connected with conductor 13 joining electromagnet 6 with programmer-retarder 4 when electromagnet 6 is energized.

In turn, fixed contact 11 is connected, via a conductor 14, directly with neutral conductor 9.

The present means functions in the following manner. After the washing programs of the machine are set via programmer-retarder 4, the latter is made alive by closing switch 8, thereby starting the run of the washing programs and energizing electromagnet 6, which causes moving contact 10 to move onto fixed contact 12.

In this state, both stator winding 2 and rotor winding 3 of motor 1 are thus supplied with power, so that the motor and the drum are set rotating at low and high speed with the predetermined sequences of programmer-retarder 4.

As soon as each washing phase in which the motor is driven at high speed is finished, programmer-retarder 4 switches off electromagnet 6, which is therefore deenergized and thus again causes moving contact 10 to move onto fixed contact 11. Consequently, both windings 2 and 3, which are in series with each other, cease being supplied from the mains and are instead short-circuited via conductor 14 and connected only with neutral conductor 9. In this state, motor 1 is no longer supplied with power, but is driven in the same direction of rotation as before by the inertial movement of the drum, thus behaving as an electric generator and generating an electric current so as to effect, via its circulation through the series circuit consisting of windings 2 and 3 and conductor 14, a dynamic braking action adapted to quickly stop the rotation of the motor and thus the drum.

According to the invention, it is also possible to provide a load element 15 connected within conductor 14 between fixed contact 11 and neutral conductor 9 and consisting of resistors (perhaps even the heating elements of the machine) and of inductors and capacitors of predetermined or variable values, dimensioned to effect the braking of the drum within predetermined brief periods of time.

Likewise, it is possible to provide various control means for supplying or interrupting the supply of power to windings 2 and 3 of motor 1, utilizing electronic components of the conventional type, for example, such as triacs, etc., instead of the above-described relay 5, without thereby going beyond the scope of protection of the present invention.

In this way, one considerably reduces the global effective duration of the washing programs, thereby reducing the energy consumption by the machine.

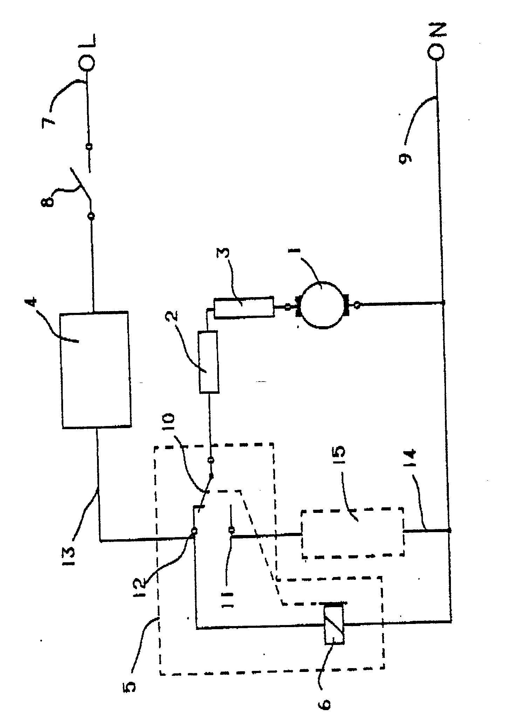

## Claims

1. A means for quickly stopping the rotation of the motor of a washing machine or a combined washer and dryer for laundry, comprising at least one programmer-retarder known per se, preferably of the electronic type and adapted to select and control the run of the washing programs of the machine, said motor preferably consisting of a universal electric motor equipped with at least one stator winding and one rotor winding, characterized in that it comprises control means (6, 10) for selectively connecting said stator and rotor windings (2, 3) with both electric conductors, the main (7) and the neutral conductor (9), of the machine via said programmer-retarder (4), or only with said neutral conductor (9), optionally via at least one load element (15).

2. The means of claim 1, characterized in that said control means comprise at least one relay (5) provided with at least one electromagnet (6) connected in series with said programmer-retarder (4), said mains (7) and said neutral conductor (9), as well as at least one moving contact (10) connected with said stator and rotor windings (2, 3) and movable by said electromagnet (6) from a first to a second operative position, and vice versa, in which said stator and rotor windings (2, 3) are connected with the power supply or with said neutral conductor (9), respectively, via a short-circuit conductor (14) or said load element (15).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| Y | GB-A-1598923 (HOTPOINT LTD)<br>* page 1, lines 8 - 10; figure 1 *<br>* page 1, lines 52 - 58 *<br>* page 2, lines 17 - 22 *<br>--- | 1 | H02P3/06<br>D06F37/30 |
| Y | FR-A-2324154 (SIEMENS AG)<br>* the whole document * | 1 | |
| A | --- | 2 | |
| A | EP-A-254708 (AUSTRIA ANTRIEBSTECHNIK G. BAUKNECHT)<br>* column 1, lines 13 - 42 *<br>--- | 1 | |
| A | US-A-3628112 (T.A.O. GROSS)<br>----- | | |

| | |
|---|---|
| | TECHNICAL FIELDS SEARCHED (Int. Cl.4 ) |
| | D06F<br>H02P |

The present search report has been drawn up for all claims

| Place of search | Date of completion of the search | Examiner |
|---|---|---|
| THE HAGUE | 22 AUGUST 1989 | BEYER F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document